# EUROPEAN PATENT APPLICATION

(11) **EP 4 686 929 A1**
(43) Date of publication of application: **04.02.2026**
(21) Application number: 25192237.3
(22) Date of filing: 28.07.2025
(51) Int. Cl.: G01M 5/00, B65B 57/02

(54) **SYSTEM FOR TESTING THE TIGHTNESS OF THE WRAPPING OF A PALLETISED LOAD AND ITS METHOD**

(30) Priority: 29.07.2024 IT 202400017575
(71) Applicant: Ercopac S.r.l., 42019 Scandiano (RE) (IT)
(72) Inventor: GRASSI, Antonio, 43121 BAISO (RE9 (IT)
(74) Representative: Silva, Valentina

(57) **Abstract**

A system for testing the tightness of a palletised load comprising a wrapping operating station, wherein a wrapping apparatus is configured to support and unwind a reel of protective packaging material in particular a stretch film to be wrapped around at least one side surface of the palletised load, a test station configured to perform a test adapted to assess the tightness of the wrapping of the palletised load, wherein said test station is positioned downstream of the wrapping operating station.

## Description

### FIELD OF APPLICATION OF THE INVENTION

The present invention relates to the field of systems for testing the wrapping of palletised loads, in particular of palletised loads wrapped or stretched using stretch film.

### STATE OF THE ART

Automatic wrapping machines for the packaging and the stabilisation of palletised loads, i.e. layers of articles stacked on loading pallets or bases, are known in the state of the art.

The wrapping allows to preserve the integrity of the load and facilitates the transport and storage of the articles.

Wrapping machines generally use stretch-type films to protect all or part of the vertical surface of the load.

When more complete protection is required, these wrapping machines are combined with devices that apply cover sheets on the top of the palletised loads to be wrapped, so as to preserve them from external agents such as water or dust that could otherwise deposit and/or penetrate inside.

Depending on the type of wrapping of the palletised load, e.g. anti-dust or anti-water type, and depending on the type of pallet to be wrapped and the products stored on it, the film is wrapped around the load in different ways.

Therefore, the tightness of the wrapping can vary and consequently the stability of the palletised load varies.

The tightness of the wrapping is very important, because the palletised load must reach its destination as intact as possible.

By destination we mean, for example, a logistical storage centre, or a supermarket, or a factory where the product making up the pallet is depalletised and subjected to further processing.

During this journey to its destination, the palletised load is subjected to stresses that can be very significant, depending on the type of route it is subjected to.

In fact, the handling and transport of the palletised load may include transfers by truck, ship, etc., which make it subject to a multitude of different stresses.

The palletised load may be subjected to high stresses such as shocks, tilting, accelerations that generate inertial forces, etc., and affect its stability.

These stresses are a consequence of the type of storage to which it is subjected and/or the type of transport to the destination where the product is to be used.

It is for these reasons that the wrapping must be appropriately designed according to various aspects such as:
- the type of palletised load, e.g. its dimensional characteristics, such as height and base dimensions,
- the type of product,
- the type and number of layers,
- the type of handling it will undergo, etc.,
- type of primary or secondary packaging.

Good wrapping means that the stretch film must properly contain the palletised load, without damaging the product and ensuring its stability during handling. In addition, it means that the load is stabilised and anchored to the pallet.

By means of wrapping, products must be tied/fixed in order to avoid falls and damage during transport and storage.

Generally, in order to understand whether the wrapping is correctly designed and effective, it is necessary to carry out tests that involve taking a wrapped palletised load and subjecting it to different types of tests.

For example, the load is tilted with respect to a horizontal plane on one or two sides, or both sides, and once it has been repositioned on the horizontal plane, its deformation is evaluated.

Or the load can be made to translate by subjecting it to acceleration and a stop shock, to then evaluate its deformation or decomposition.

These tests not only make it possible to check whether the wrapping is carried out correctly, but also to investigate whether the film used has the correct technical characteristics for the given product.

Additionally, these tests also make it possible to check whether the layers of the pallet are made in a stable manner.

Or it is also possible, by means of said tests, to monitor whether the primary packaging, such as the bottle/container, or the secondary packaging, such as the bundle/carton, are made according to suitability specifications for a stable palletised load.

Palletised loads are generally tested in test areas away from the production areas of the palletised load and its wrapping.

There are known test stations in companies that manufacture the wrapping machines or in specific laboratories in charge of pallet stability tests.

Therefore, the manufacturing companies that make the palletised load and wrap it have to send said load to the factories of the companies that make the wrapping machines or to specific laboratories in order to test the tightness of the wrapping.

The distance between the production plant and the test area can therefore also be very significant, as the production plant and test area may be located in different cities, or different states, or even different continents.

These tests have a significant cost impact due to the transfer of the wrapped palletised load, which is necessary.

In addition, this involves tests being performed on wrapped palletised loads that have already been subjected to significant stresses on the way to the test area, e.g. due to transfer by truck, or ship, etc.

In other cases, the products that make up the pallet are shipped inside appropriate boxes and are palletised manually, or automatically and wrapped directly in the companies that make the wrapping machines or in specific test laboratories.

Therefore, these are never real tests, on the product that actually came off the customer's wrapping line.

Therefore, the tests carried out on these loads are not able to provide comprehensive and reliable results.

A further disadvantage of said tests is that a significant time lag elapses between the production of the wrapped pallet and the test due to the aforementioned transfers, and this does not allow any rapid corrective information to be provided to the wrapping machine that produced the palletised load.

It can therefore happen that a negative test result is only known after this wrapped pallet has been produced in large quantities, with important cost consequences due to having produced an unsuitable product.

Furthermore, it is not possible to correctly identify whether a negative test result is due to any non-conformity of the primary packaging, such as the bottle/container, or of the secondary packaging, such as the bundle/box.

### DISCLOSURE AND ADVANTAGES OF THE INVENTION

The technical problem underlying the present invention is to make available a system for testing the tightness of the wrapping of a palletised load and its method, which is structurally and functionally designed to overcome one or more of the limitations set out above with reference to the mentioned prior art.

In the context of the aforementioned problem, a main scope of the invention is to provide a system for testing the tightness of the wrapping of a palletised load, and a method for testing its tightness when said load has not yet undergone any stresses due to transfer after wrapping, other than those for exiting the wrapping area.

This makes it possible to guarantee tests with real, comprehensive and safe results.

Therefore, it is an object of the invention to make available to the art a system for testing the tightness of the wrapping of a palletised load and the related method, whereby the tightness is tested in the same plant in which the wrapping is performed, preferably directly at the outlet of the wrapping machine that wrapped it.

This reduces the costs of carrying out these tests by avoiding costly transfers of the palletised load and avoiding the costs of commissioning specialised testing laboratories.

Furthermore, in the event that the suitability specifications for the manufacturing of a stable palletised load are not correctly met, this invention makes it possible to identify whether the cause is the pallet wrapping, and/or the primary packaging, and/or the secondary packaging.

Thanks to said invention, it is possible to check in real time whether the primary or secondary packaging is correctly made.

Furthermore, it is also the purpose of the invention to make available to the art a system for testing the tightness of the wrapping of a palletised load and the related method, which enables rapid corrective action on the preparation of the palletised load, thus reducing the products to be discarded. This reduces the high costs of producing an unsuitable load.

It also allows the palletised load manufacturer to manage the monitoring of said load, carrying out all the necessary tests for correct palletisation, autonomously and according to its specific needs and production schedule.

This allows the manufacturer to decide on the type and intervals of monitoring to be carried out periodically.

This also further reduces the costs of producing unsuitable loads.

A further aim of the invention is to reduce the environmental impact of these offline tests by avoiding handling and disposal of products used only for testing purposes.

These and other objects are reached by the characteristics of the invention as set forth in the independent claims. The dependent claims outline preferred and/or particularly advantageous aspects of the invention.

In particular, the present invention makes available a system for testing the tightness of the wrapping of a palletised load comprising an operating wrapping station and a test station.

Preferably, the wrapping operating station comprises a wrapping apparatus which is configured to support and unwind a reel of protective packaging material, in particular a stretch film to be wrapped around at least one side surface of the palletised load.

Preferably the test station is configured to perform a test to assess the tightness of the wrapping of the palletised load.

According to a preferred aspect of the invention, said test station is positioned downstream of the wrapping operating station.

Preferably, the system comprises a programmable control unit configured to put the wrapping operating station in communication with the test station.

Advantageously, the wrapping operating station communicates to the test station, via the programmable control unit, when and how to perform the test to assess the tightness of the wrapping of the palletised load.

According to a preferred embodiment, the test station sends information on the result of the assessment of the tightness of the wrapping of the palletised load to the programmable control unit which receives said information and converts it into operator-readable results and/or into instructions to be sent to the wrapping operating station to maintain or modify the type of wrapping to be carried out.

Advantageously, the test station comprises conveyor means adapted to support and/or handle the wrapped palletised load through the test station.

Preferably said conveyor means being configured to receive the palletised load from the wrapping operating station.

Optionally, the conveyor means are arranged in continuity and preferably in mechanical connection with the handling means of the wrapping operating station to allow a direct transfer of the palletised load from the wrapping operating station to the test station.

Preferably, the conveyors further comprise a tilting device for varying the tilt of the palletised load according to at least one longitudinal direction, parallel to an advancement direction of the palletised load and/or a transverse direction, orthogonal to the advancement direction.

According to a preferred embodiment, the test station comprises a transverse abutment device and/or a longitudinal abutment device positioned respectively in correspondence with a transversal and/or parallel side to the advancement direction (A) of the palletised load.

Advantageously, said abutment device has a height of at least half the height of the palletised load and configured to prevent the palletised load from falling during tilting.

Preferably the test station comprises a stop device configured to stop the advancement of the palletised load by engaging, by contact, preferably at a base thereof.

According to an aspect of the invention, the test station comprises, control devices for detecting the shape of the palletised load preferably before and/or during and/or after the test.

Optionally wherein the tilting device is mechanically integrated into a test conveyor of the roller and/or chain type.

Optionally, the conveyor means comprise a dwell conveyor of the roller and/or chain type, preferably positioned between the wrapping station and the test station.

Also covered by the invention is the method for testing the tightness of a palletised load manufactured by means of the system, said method comprising the steps of:
- placing a palletised load in a wrapping operating station,
- wrapping by means of a wrapping apparatus a protective packaging material, in particular a stretch film, around at least one side surface of the palletised load,
- transferring the wrapped palletised load to a test station placed downstream of the wrapping operating station,
- performing a test to assess the tightness of the wrapping of the palletised load.

Preferably, said method involves, using a programmable control unit, to put the wrapping operating station in communication with the test station.

Preferably, said method involves communicating the test station when and how to perform the test to assess the tightness of the wrapping of the palletised load.

Advantageously, the method involves using the test station to send information on the result of the assessment of the tightness of the wrapping of the palletised load to the programmable control unit which receives said information and converts it into operator-readable results and/or into instructions to be sent to the wrapping operating station to maintain or modify the type of wrapping to be carried out.

Optionally, the method provides, by means of the test station, to send information on the assessment of the tightness of the wrapping of the palletised load to the programmable control unit which receives said information and converts it into operator-readable results and/or into instructions to be sent to programmable control units of machines placed upstream of the system and which receive said information and convert it into instructions for maintaining or modifying the operating cycle of said machines.

Preferably, the step of transferring the wrapped palletised load from the wrapping operating station to the test station takes place automatically by means of conveyor means of the test station arranged in continuity and preferably in mechanical connection with handling means of the wrapping operating station.

Optionally, the method provides, after the palletised load wrapping step and prior to the test step, for the palletised load to remain between the wrapping operating station and the test station for the time required to finish the process of tensioning and stabilising the protective packaging material on the palletised load.

Preferably, the method involves using the test station to tilt the palletised load in a longitudinal direction, parallel to an advancement direction of the palletised load and/or to tilt the palletised load according to a transverse direction, orthogonal to the advancement direction.

Preferably the method comprises, via the test station, advancing the palletised load on conveyor means until it hits against a stop device.

According to a preferred aspect, the method provides, at the test station, to detect the shape of the palletised load prior to and/or during and/or after the test and preferably to send the detected data to the programmable control unit.

Said objects and advantages are all achieved by the system for testing the tightness of the wrapping of a palletised load and its method, according to the present invention, and which is characterised by the following claims.

### BRIEF DESCRIPTION OF THE DRAWINGS

These and other features will be more apparent from the following description of certain embodiments illustrated by way of non-limiting example in the accompanying drawings.
- Figure 1: shows a plan view of a system according to the invention with a wrapping operating station and test station;
- Figure 2: shows an axonometric view of a wrapping operating station of a palletised load.

### DESCRIPTION OF THE INVENTION

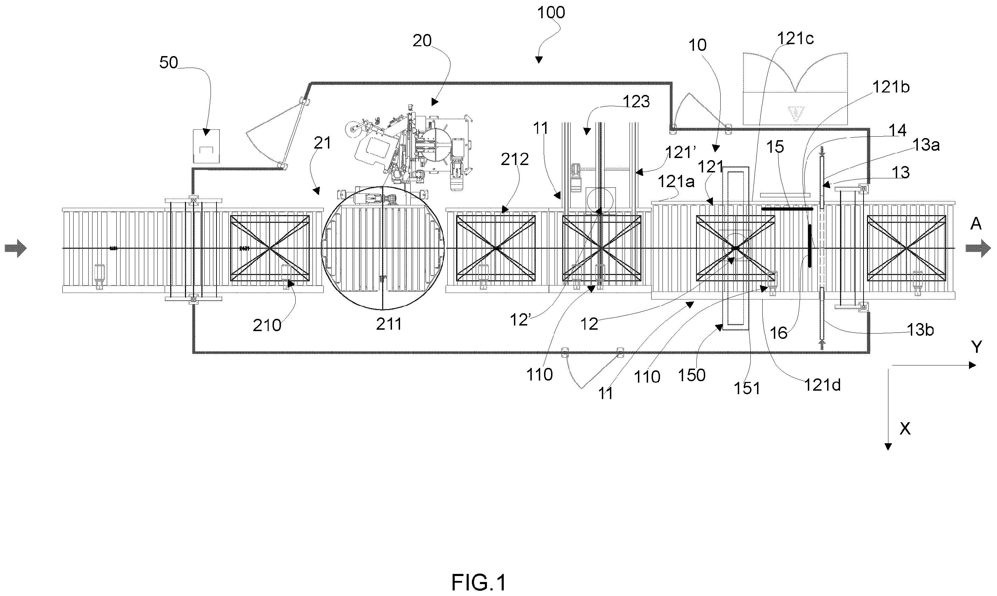

With particular reference to Figure 1, a system 100 is shown for testing the tightness of the wrapping of a palletised load 500.

The palletised load 500 also referred to as pallet, generally comprises a support pallet 501 or base on which a plurality of products is stacked.

The dimensions of said palletised load 500 may vary between various sizes such as 900x600, 800x600, 800x1200, 100x1200, 1420x1120, etc., which are generally the standard dimensions of a support pallet 501.

In particular, said palletised load 500 is wrapped by means of protective packaging material 510.

Said packaging material 510 can be of different types, preferably a stretch film. The stretch film 510 is for example made of polyethylene.

Alternatively, protective packaging materials 510 such as mesh-formed materials, paper-type materials, etc., may also be used.

In the following, the protective packaging material 510 will also be simply called film 510 without thereby restricting the field of application of the invention.

By means of said protective packaging material 510 a side surface 504 of the palletised load 500 is wrapped.

Said system 100 comprises a wrapping operating station 20 in which the palletised load 500 is wrapped.

As depicted in Figure 1, the system 100 further comprises a test station 10.

Said test station 10 is configured to carry out a test adapted to assess the tightness of the wrapping of the palletised load 500 wrapped by means of the wrapping operating station 20.

According to an aspect of the invention, said test station 10 is positioned downstream of the wrapping operating station 20.

According to a possible embodiment, not shown in the figure, the system may comprise several wrapping operating stations 20, positioned in the same operating zone or plant, in which the test station 10 is positioned.

The term "same operating zone or plant, in which the test station 10 is positioned" means that the palletised load 500, which has been wrapped in the wrapping operating station 20, can be brought to the test station 10, by a very limited route, which therefore does not subject it to any or very little stress. The transfer can be carried out by means of a pallet truck, or a forklift, or AGV, or LGV, or by means of conveyors that link mechanically and operationally the wrapping operating stations 20 and the test station 10.

These allow tests to be performed on an intact palletised load 500 and therefore provide comprehensive and safe results.

According to an aspect of the invention, the system 100 further comprises a programmable control unit 50 configured to put the wrapping operating station 20 in communication with the test station 10.

According to a preferred embodiment, said wrapping operating station 20, comprises a wrapping apparatus 30 configured to support and unwind a reel 520 of protective packaging material 510 to be wrapped around the palletised load 500.

Said wrapping operating station 20, preferably comprising handling means 21 adapted to support and/or handle the palletised load 500 by bringing it into the operational position for wrapping at the wrapping apparatus 30.

Said wrapping apparatus 30 is configured to cooperate with said handling means 21.

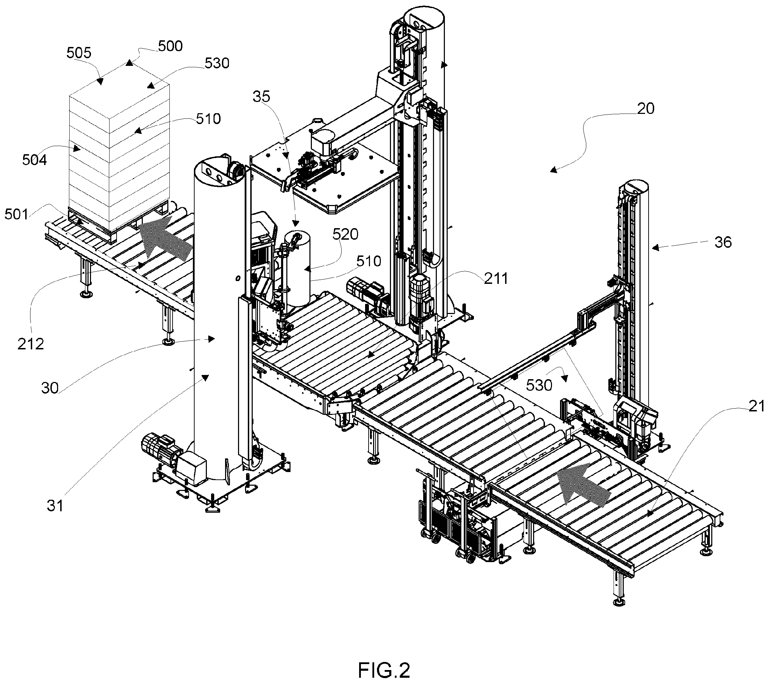

As shown in Figure 2, said handling means 21 may provide drive means 210 for advancing the pallet 500 as far as the wrapping position.

As known to a person skilled in the art, said handling means 21 can comprise a plurality of conveyors, for example of the roller or chain type. The type of conveyors of the handling means 21 generally depends on the conformation of the type of support pallet 501, as well as on the type of stacked products and on their stability.

In the figures and in the description, reference will often be made to roller conveyor-type handling means 21. It is understood, however, that the same considerations can be developed in relation to handling means 21 with conveyors of a different type, such as with chains.

Known wrapping operating stations 20 can be of various types, e.g. with rotary wrapping apparatus 30 and fixed palletised load 500, or with fixed wrapping apparatus 30 and rotary palletised load 500.

In the case where the wrapping operating station 20 works with a rotary palletised load 500, a preferred embodiment provides that said first handling means 21 comprise a wrapping conveyor 211 configured to rotate the palletised load 500.

Preferably, said rotation takes place according to a vertical axis that substantially coincides with the axis of symmetry of the pallet 500 itself positioned on the wrapping conveyor 211, subject to the positioning and conformation tolerances of said palletised load 500.

Said wrapping apparatus 30 is further configured to cooperate with said wrapping conveyor 211.

In the case of a wrapping operating station 20 with a rotary palletised load 500, during the rotation of the wrapping conveyor 211 and the associated pallet 500 in position on it, the wrapping apparatus 30 allows the reel 520 to unwind to transfer the film 510 around the side surface 504 of the load 500.

Generally, the wrapping operating station 20 comprises clamping means that hold a first flap 511 of said film 510 unwound from the reel 520 so that a said first flap 511 moves integral with the pallet 500 during the work cycle of the machine 100.

Said clamping means can be positioned at the base of the pallet 500, e.g. integrated into the wrapping conveyor 211.

According to a preferred embodiment, said wrapping apparatus 30 comprises a lifting body 31 adapted to support and move a wrapping head 35, on which the reel 520 is installed, as depicted in Figure 2.

In particular, said wrapping head 35 is vertically movable along the lifting body 31.

Preferably the wrapping head 35 is vertically movable during the rotation of the palletised load 500, in order to wrap the palletised load 500 over part or all of its height.

Said wrapping operating station 20 may comprise a feeder device 36 for positioning a cover sheet 530.

Said feeder device 36 is configured to cover, with the cover sheet 530, an upper surface 505 of the palletised load 500.

Said feeder device 36 may be positioned upstream of or at the wrapping apparatus 30.

According to an aspect of the invention, the feeder device 36 can be configured in different ways. In fact, it can provide a gantry, a column, or alternatively an anthropomorphic robot structure capable of placing the cover sheet 530 above the palletised load 500.

We will not go into the details of the operation of this feeder device 36 as it can be implemented in various ways known to a person skilled in the art.

However, it is understood that alternative solutions known to a person skilled in the art and any variations in detail that may be necessary for technical and/or functional reasons, are considered as of now to fall within the same protective scope.

According to an aspect of the invention, said test station 10 is configured to perform a test simulating the stresses to which the wrapped palletised load 500 will be subjected, during subsequent storage and transport, by road, or by ship, etc.

Thanks to the test performed, it is possible to assess the tightness of the wrapping of the palletised load 500.

Preferably by means of the programmable control unit 50, the wrapping operating station 20 communicates to the test station 10 when and how to perform the test to assess the tightness of the wrapping of the palletised load 500.

The input to perform the test of the wrapped pallet 500 can also be provided manually by the operator via commands from an interface of said programmable control unit 50.

Said programmable control unit 50 can store and archive information on the type of tests performed.

Said information on the type of tests performed can be stored in a correlated manner with information on the type of palletised load 500 on which the test was performed, and/or the type of product, and/or the type and number of layers, and/or the type of wrapping.

Preferably at the test station 10 the machine 100 comprises conveyor means 11 adapted to support and/or move the wrapped palletised load 500 according to an outlet direction.

Said conveyors 11 can be used as a loading zone for the palletised load 500 to be tested, positioned by forklift, or AGV, or LGV or pallet truck.

Alternatively, the test station 10, and in particular its conveyor means 11, are preferably positioned in continuity with the handling means 21.

Said conveyor means 11 can be positioned downstream of the wrapping conveyor 211 and in continuity with it from which they receive the palletised load 500 to be tested.

Optionally, the handling means 21 may comprise downstream of the wrapping conveyor 211 one or more outlet conveyors 212 that connect mechanically with the test station 10 and in particular with its conveyor means 11.

Said conveyor means 11 can be positioned in line or in parallel with the handling means 21 for the transit of the palletised load.

The parallel configuration allows tests to be carried out, without hindering the ejection of the pallets 500 that are not to be tested.

As depicted in Figure 1 said conveyor means 11 may comprise activation means 110 to advance the pallet 500 along the test station 10.

As known to a person skilled in the art, said conveyor means 11 may comprise a plurality of conveyors for example of the roller and/or chain type. The type of the conveyor means 11 generally depends on the conformation of the type of support pallet 501, as well as on the type of stacked products and on their stability.

In addition, the type of conveyor means 11 depends on the type of test to be carried out.

Each of said conveyors are mechanically and operationally associated with the activation means 110 for their handling and the consequent advancement of the palletised load 500 they support.

In the figures and in the description, we will often refer to conveyor means 11 with roller-type conveyors. It is understood, however, that the same considerations can be developed in relation to conveyor means 11 of a different type, such as with chains.

The conveyor means 11 can also comprise conveyors that integrate the roller and chain such as those used to divert the palletised load 500 by 90° in its transfer, such as what is known in technical jargon as diverting conveyors.

According to an aspect of the invention, the test station 10 comprises a tilting device 12 for varying the tilt of the palletised load 500 according to at least one longitudinal direction Y, parallel to an advancement direction A of the palletised load 500.

Advantageously, said tilting device 12 is further configured to vary the tilt of the palletised load 500 according to a transverse direction X, orthogonal to the advancement direction A.

Advancement direction A refers to the direction along which the pallet 500 moves during its passage from the wrapping operating station 20 to the test station 10 and/or within it. Said advancement direction A may also undergo diversions and not be consistently straight.

Said tilting device 12 is preferably mechanically integrated into a test conveyor 121, of the conveyor means 11.

Said tilting device 12, may for example be configured to raise or lower one of the ends 121a, 121b transversal to the advancement direction A, of the test conveyor 121.

In this way, the palletised load 500, which is positioned on said test conveyor 121, is advancing with its base 501 on a tilted plane in the advancement direction A.

In this case, the palletised load 500 is subjected to both the acceleration of gravity due to the inclination and the acceleration of advancement due to the activation means 110 that trigger the movement of the test conveyor 121.

In the case where the test conveyor 121 is of the roller type, the tilting device 12, can be configured to raise or lower one of the opposing sides 121c, 121d arranged parallel to the advancement direction A, of the test conveyor 121.

In this way, the palletised load 500, which is positioned on said test conveyor 121, is advancing with its base 501 on a tilted plane in the transverse direction to the advancement direction A.

In this case, the palletised load 500 is subjected to the acceleration of gravity due to the inclination.

Further, the test station 10 may comprise a second tilting device 12' preferably mechanically integrated into a second test conveyor 121'.

In a preferred embodiment, the tilting device 12' integrated into the test conveyor 121 can tilt the palletised load 500 in the transverse direction X, orthogonal to the advancement direction A.

In this case, the palletised load 500 is subjected to both the acceleration of gravity due to the inclination and the acceleration of advancement due to the second activation means 110 that trigger the movement of the second test conveyor 121'.

The test conveyor 121 and the second test conveyor 121', are preferably arranged in succession one after the other without the order of succession being binding.

In a preferred form, the test conveyor 121 tilts the palletised load 500 in the advancement direction A, and the second test conveyor 121' tilts the palletised load 500 in the transverse direction to the advancement direction A.

We will not go into the details of the tilting devices 12, 12' required to tilt a conveyor 121, 121' in the longitudinal Y or transverse X direction as different embodiments, known to a person skilled in the art, can be made.

Each of these characteristics contributes to create tests that simulate the stresses to which the palletised load 500 will be subjected during subsequent transport and storage in order to assess its stability.

In an advantageous aspect, the test station 10 can be suitable for manual tests carried out directly by the operator, on the wrapped load 500, with known equipment that complies with industry-specific standards.

Preferably, the operator, via the interface, can provide the programmable control unit 50 with information on the tests performed and the results obtained for archiving and storage.

Advantageously, the programmable control unit 50 can integrate the results of tests performed automatically, with the results of tests performed manually by the operator, to produce a complete and reliable result on the tightness of the wrapping of the palletised load 500.

According to a preferred form, said conveyor means 11 comprise a dwell conveyor 123 of the roller and/or chain type preferably preceding the test conveyors 121, 121'.

Figure 1 shows a preferred embodiment in which the dwell conveyor 123 is positioned between the wrapping station 20 and the test station 10.

The purpose of said dwell conveyor 123 is to create a waiting area after the wrapping operating station 20 in which the palletised load 500 just wrapped can be left to rest for a sufficient time for the protective packaging material 510 to finish the tensioning and stabilisation process, i.e. for the wrapping to have time to complete the product adaptation/containment steps.

Said dwell conveyor 123 is preferably positioned to the side of the advancement path of the load 500 so as not to block the transit of the wrapped pallets 500.

It should be pointed out that not all the pallets 500, which are wrapped, are tested in the test station 10, but some of them may simply pass through to go to an unloading area where they are picked up for subsequent storage or transport.

In fact, the pallet 500 test can be done on a sample basis according to rules specifically designed for each type of product.

The dwell conveyor 123, depicted in Figure 1, comprises a mechanically integrated roller and chain conveyor to divert the palletised load 500 by 90° in its transfer, i.e. a diverting type conveyor, familiar to a person skilled in the art.

This dwell conveyor 123 can be used to tilt the pallet 500 in place of the second conveyor 121'.

According to a preferred embodiment, the test station 10 comprises a stop device 15, 16 configured to stop the advancement of the palletised load 500.

Preferably said stop 15, 16 is engaged by contact particularly at the base 501.

Said stop device 15, 16 can be mechanically connected to the conveyors 11 or be independent and fixed to the ground.

In the test phase, thanks to this stop 15, 16, the palletised load 500 is blocked in its advancement, counteracting the forces resulting from the acceleration that the load 500 has acquired as a result of its inclination and/or the advancement of the conveyor 121, 121'.

Preferably, the test station 10 comprises a longitudinal stop 15 and a transverse stop 16 to stop the palletised load 500 in its movement along the transverse direction X and along the longitudinal direction Y respectively.

The reaction forces generated in the collision against the stop 15, 16, can cause a deformation of the palletised load 500 which may tend to decompose and assume reduced stability.

This makes it possible to assess whether the load 500 has been correctly wrapped with the protective packaging material 510, which is able to guarantee a sufficient hold of the product layers without affecting their stability.

Preferably said stop device 15, 16 can be movable so as to move to a position out of the way where it allows the palletised load 500 to pass through, once the test has been completed.

In order to avoid during the impact against the stop 15, 16 the palletised load 500, tipping over or overturning part of its product, the test station 10 may further comprise a transverse abutment device 13, and/or a longitudinal abutment device 14 positioned at a transversal and/or longitudinal side of the conveyor means 11, respectively.

Preferably said abutment device 13, 14 is at least half the height of the palletised load 500.

This creates support for at least a portion of the load 500, which prevents the palletised load 500 from falling during tilting.

Preferably said abutment device 13, 14 comprises a surface having a sufficient width to contain/retain the pallet 500.

In an advantageous configuration, the transverse abutment device 13 is movable between a position in which it allows and in which it prevents the passage of the palletised load 500.

This allows the load 500 to pass through and continue its advancement once the test is complete.

Preferably, the transverse abutment device 13 consists of two portions 13a, 13b translating towards/ away from each other.

This makes the solution simple and easily applicable at the test conveyors 121, 121'.

We will not go into the details of the technical construction characteristics of said transverse abutment device 13 as it can be realised in various ways known to a person skilled in the art.

According to an aspect of the invention said system 100 comprises, at the test station 10, control devices 150 for detecting the shape of the palletised load 500 preferably prior to and/or during and/or after the test.

Preferably said control devices 150 are systems capable of detecting the shape of the palletised load 500.

They can be optical control devices 150 such as cameras, photocells, laser gauges, etc.

Advantageously, said control devices 150 can detect the shape and/or size of the palletised load 500 after the test.

Advantageously, said control devices 150 can also detect the shape and/or size of the palletised load 500 during the test.

Advantageously, said control devices 150 can also detect the shape and/or size of the palletised load 500 before the test.

According to an embodiment shown in the figure, said control devices 150 can be installed on a support structure 151 positioned at the conveyors 11, in particular straddling the test conveyors 121, 121'.

Said control devices 150 can be positioned laterally and/or above the palletised load 500 that is being tested to perform a lateral and/or upper detection.

The results of said detections are preferably sent to the programmable control unit 50 of the machine 100.

Said programmable control unit 50 can store information on the theoretical shape and dimensions of the pallet 500 and/or the maximum permissible deviations from said shape and dimensions.

Said programmable control unit 50 receives the data detected by the control devices 150 after the test and compares it with said theoretical information it contains in its memory, or compares it with the information received from the control devices 150 detecting the shape and/or dimensions of the palletised load 500 before the test.

Said maximum permissible deviations related to the dimensions of the palletised load 500 are defined according to the type of pallet 500 and product, so as to guarantee sufficient stability to withstand subsequent stresses to which the pallet 500 may be subjected as a result of transport and storage.

In an advantageous aspect, once the test has been carried out and the deviation from the theoretical values has been detected, the programmable control unit 50 processes said information and provides a result of the tightness of the wrapping of the palletised load 500.

Preferably, the programmable control unit 50 is configured to make said result available to the operator via the interface.

This makes it possible to assess whether the wrapping of the load 500 is correct or whether a modification is necessary.

In a particularly advantageous aspect, the programmable control unit 50 is configured to convert the result into instructions to be sent to the wrapping operating station 20 to maintain or change the type of wrapping to be performed.

In a further aspect, the programmable control unit 50 is configured to convert the result into instructions to be shown to the operator, via the interface to maintain or change the type of wrapping to be performed.

Thanks to this solution, it is possible to intervene quickly and automatically or manually on the work cycle of the wrapping station 20.

In particular, the test result has a feedback effect in that it is converted into corrective action on the type of wrapping.

Said corrective action may comprise an automatic change to the wrapping recipe of the wrapping operating station 20, via the programmable control unit 50.

Alternatively, said corrective action may comprise a change to the recipe that the operator enters manually via the interface.

In an advantageous variant, the test result has a feedback effect that is also converted into corrective action on the palletising type upstream of the wrapping.

In such a case, the programmable control unit 50 is configured to convert the test result into instructions to be sent to palletising machines that precede the system 100 to maintain or modify the configuration of the pallet 500 to be implemented.

In an advantageous variant, the test results that the programmable control unit 50 makes available to the operator via the interface allow the operator to make evaluations and possible corrections to the work cycles of machines downstream of the system 100 that perform primary packaging e.g. containers or secondary packaging e.g. bundles or boxes.

Each of these features contributes to the aim of making available to the art a system for testing the tightness of the wrapping of a palletised load 500 and the related method, which enables rapid corrective action on the preparation of the palletised load, thus reducing the products to be discarded and the associated high costs due to the production of an unsuitable load.

The system 100 described enables the operating method also covered by the present invention to be applied.

Said method for wrapping a palletised load 500 comprises the steps of:
- placing a palletised load in a wrapping operating station 20
- wrapping by means of a wrapping apparatus 30 a protective packaging material 510, in particular a stretch film, around at least one side surface 504 of the palletised load 500,
- transferring the wrapped palletised load 500 to a test station 10 placed downstream of the wrapping operating station 20,
- performing a test to assess the tightness of the wrapping of the palletised load 500.

The method may involve inserting a protective film over the load 500 before wrapping.

According to a preferred aspect, the step of transferring the wrapped palletised load 500 from the wrapping operating station 20 to the test station 10 takes place automatically by means of conveyor means 11 of the test station 10 arranged in continuity and preferably in mechanical connection with handling means 21 of the wrapping operating station 20.

According to a further aspect, the step of transferring the palletised wrapped load 500 to the test station 10 takes place from several wrapping operating stations 20.

In particular, said method provides to transfer the palletised load 500, which has been wrapped in one of the wrapping operating stations 20, to the test station 10 along a route, which is very limited, therefore does not subject it to any or very little stress. The transfer can be carried out by means of a pallet truck, or LVG, AGV by means of conveyors mechanically and operationally linking the wrapping operating stations 20 and the test station 10.

Said method advantageously provides to perform a test that simulates the stresses to which the wrapped palletised load will be subjected during subsequent storage and transport by road or ship and assessing its stability.

Preferably, said method, by means of a programmable control unit 50, provides to put the wrapping operating station 20 in communication with the test station 10.

Preferably, said method provides, by means of the wrapping operating station 20, to communicate to the test station 10 when and how to perform the test to assess the tightness of the wrapping of the palletised load 500.

Preferably, said method provides that the input to perform the test of the wrapped pallet 500 may also be provided manually by the operator by means of commands from an interface of said programmable control unit 50.

Not all pallets 500 wrapped in the wrapping operating station 20 have to be tested, but the test can be carried out on a random basis on only a few pallets 500 at a set frequency implemented in the programmable control unit 50.

If the pallet 500 is not to be subjected to testing, the pallet 500 passes through the test station 10 to arrive at the unloading and ejection position.

Furthermore, said method provides that not all the wrapped pallets 500 have to undergo the same tests, but different tests can be carried out depending on the type of product being palletised or the number and type of layers and the type of wrapping.

Said method provides that this information on the type of test to be performed can be implemented by recipe in the programmable control unit 50, or implemented via an interface by the operator.

For example, the method may comprise carrying out the test by tilting the palletised load 500 according to at least one longitudinal direction Y, parallel to an advancement direction A of the palletised load 500.

Said method may comprise performing the test by tilting the palletised load 500 in a transverse direction X, orthogonal to the advancement direction A.

Depending on the type of test to be performed for a given load 500, it may be necessary to perform only one tilt in the longitudinal direction Y or in the transverse direction X or both.

Preferably, the load 500 is tilted in the longitudinal direction Y, while it is moving and advancing in the advancement direction A on conveyor means 11.

In particular, it advances on a test conveyor 121.

Preferably, the load 500 is tilted in the transverse direction X while it is stationary and not advancing in the advancement direction A on conveyor means 11.

Alternatively, the load 500 can be tilted in the transverse direction X, while it is moving and advancing in the direction orthogonal to the advancement direction A on a second test conveyor 121'.

According to a preferred form, said method may involve making the load 500 stand by after wrapping and before testing for a time necessary for the protective packing material 510 to stabilise and adapt to the load 500.

This allows for more realistic and reliable test results.

Preferably, said method provides to advance the palletised load 500 on conveyor means 11 until it hits against a stop device 15, 16.

When the load collides with the stop device 15, 16 it tends to break down and deform.

The method provides to detect the deformation of the shape of the palletised load 500 at the test station 10.

According to an aspect of the invention, the method provides a step of detecting the shape of the palletised load 500 prior to and/or during and/or after the test, in order to compare said detected information.

Said method provides to send the results of said detections to the programmable control unit 50 of the machine 100.

Preferably, said method provides to compare the results of said detections with information on the theoretical shape and dimensions of the pallet 500 and/or the maximum permissible deviations from said shape and dimensions contained in the memory of the programmable control unit 50.

Optionally, said method provides to compare the results of said detections with information received from the control devices 150 that detect the shape and/or dimensions of the palletised load 500 prior to the test.

In an advantageous aspect, once the test has been carried out and the deviation from theoretical values has been detected, the method involves the programmable control unit 50 processing said information and providing a result of the tightness of the wrapping of the palletised load 500.

In a particularly advantageous aspect, the method involves the programmable control unit 50 converting the result into instructions to be sent to the wrapping operating station 20 to maintain or change the type of wrapping to be performed.

In a further aspect thereof, the method involves the programmable control unit 50 converting the result into instructions to be displayed to the operator, via the interface to maintain or change the type of wrapping to be performed.

Said method may comprise automatically changing the wrapping recipe of the wrapping operating station 20 via the programmable control unit 50.

Alternatively, said method may comprise modifying the recipe manually by the operator, via the interface.

In an advantageous variant, said method can comprise automatically changing the palletising recipe upstream of the wrapping.

In this case, the method involves the programmable control unit 50 converting the result of the tests into instructions to be sent to palletising machines that precede the system 100 to maintain or modify the configuration of the pallet 500 to be implemented.

The same feedback action can be implemented on other machines, which precede the system 100 in the production cycle.

It in any case is intended for that described above to be given by way of non-limiting example; therefore, possible detail variants that may be required for technical and/or functional reasons are considered from now as to fall within the same protective scope defined by the claims below.

## Claims

1. A system (100) for testing the tightness of a palletised load (500) comprising:
- a wrapping operating station (20) wherein a wrapping apparatus (30) is configured to support and unwind a reel (520) of protective packaging material (510) in particular a stretch film to be wrapped around at least one side surface (504) of the palletised load (500),
- a test station (10) configured to perform a test adapted to assess the tightness of the wrapping of the palletised load (500),
**characterised in that** said test station (10) is positioned downstream of the wrapping operating station (20).

2. The system (100) according to claim 1, which comprises a programmable control unit (50) configured to put the wrapping operating station (20) in communication with the test station (10), preferably wherein the wrapping operating station (20) communicates to the test station (10) when and how to perform the test to assess the tightness of the wrapping of the palletised load (500).

3. The system (100) according to claim 2, wherein the test station (10) sends information about the result of the assessment of the tightness of the wrapping of the palletised load (500) to the programmable control unit (50), which receives said information and converts it into operator-readable results and/or into instructions to be sent to the wrapping operating station (20) to maintain or modify the type of wrapping to be carried out.

4. The system (100) according to claim 1, wherein the test station (10) comprises conveyor means (11) adapted to support and/or handle the wrapped palletised load (500) through the test station (10) said conveyor means (11) being configured to receive the palletised load (500) from the wrapping operating station (20).

5. The system (100) according to claim 4, wherein the conveyor means (11) are arranged in continuity and preferably in mechanical connection with handling means (21) of the wrapping operating station (20) to enable direct transfer of the palletised load (500) from the wrapping operating station (20) to the test station (10), preferably said conveyor means (11) comprise a dwell conveyor (123) of the roller and/or chain type, preferably positioned between the wrapping station (20) and the test station (10).

6. The system (100) according to any one of claims 4 or 5, wherein the conveyor means (11) further comprise a tilting device (12) for varying the tilt of the palletised load (500) according to at least one longitudinal direction (Y), parallel to an advancement direction (A) of the palletised load (500) and/or a transverse direction (X), orthogonal to the advancement direction (A), preferably said tilting device (12) is mechanically integrated into a test conveyor (121, 121') of the roller and/or chain type.

7. The system (100) according to any one of the preceding claims, wherein the test station (10) comprises a transverse abutment device (13) and/or a longitudinal abutment device (14) positioned at a side transversal and/or parallel to the advancement direction (A) of the palletised load (500) respectively, said abutment device (13, 14) having a height of at least half the height of the palletised load (500) and configured to prevent the palletised load (500) from falling during tilting.

8. Thesystem (100) according to any one of the preceding claims, wherein the test station (10) comprises a stop device (15, 16) configured to stop the advancement of the palletised load (500) by engaging, by contact, preferably at a base (501) thereof.

9. The system (100) according to any one of the preceding claims, wherein the test station (10) comprises control devices (150) for detecting the shape of the palletised load (500) preferably before and/or during and/or after the test.

10. A method for testing the tightness of a palletised load (500) performed by means of the system (100), said method comprising the steps of:
- placing a palletised load in a wrapping operating station (20)
- wrapping by means of a wrapping apparatus (30) a protective packaging material (510), in particular a stretch film, around at least one side surface (504) of the palletised load (500),
- transferring the wrapped palletised load (500) to a test station (10) placed downstream of the wrapping operating station (20),
- performing a test to assess the tightness of the wrapping of the palletised load (500).

11. The method according to claim 10, which provides, by means of a programmable control unit (50), to put the wrapping operating station (20) in communication with the test station (10), preferably for communicating to the test station (10) when and how to perform the test adapted to assess the tightness of the wrapping of the palletised load (500).

12. The method according to claim 11, which provides, by means of the test station (10) to send information on the result of the assessment of the tightness of the wrapping of the palletised load (500) to the programmable control unit (50) which receives said information and converts it into operator-readable results and/or into instructions to be sent to the wrapping operating station (20) to maintain or modify the type of wrapping to be carried out.

13. The method according to any one of claims 10 to 12, which provides, by means of the test station (10), to send information on the assessment of the tightness of the wrapping of the palletised load (500) to the programmable control unit (50) which receives said information and converts it into operator-readable results and/or into instructions to be sent to programmable control units of machines placed upstream of the system (100) and which receive said information and convert it into instructions for maintaining or modifying the operating cycle of said machines.

14. The method according to any one of claims 10 to 13, wherein the step of transferring the wrapped palletised load (500) from the wrapping operating station (20) to the test station (10) takes place automatically by means of conveyor means (11) of the test station (10) arranged in continuity and preferably in mechanical connection with handling means (21) of the wrapping operating station (20) and preferably provides, after the step of wrapping the palletised load (500) and prior to the step of performing the test, to let the palletised load (500) stand between the wrapping operating station (20) and the test station (10) for a time necessary to finish the process of tensioning and stabilising the protective packaging material (510) on the palletised load (500).

15. The method according to any one of claims 10 to 14, which comprises, by means of the test station (10), advancing the palletised load (500) on conveyor devices (11) until it hits against a stop device (15, 16).
